# EUROPÄISCHE PATENTANMELDUNG

(11) **EP 1 035 706 A2**
(43) Veröffentlichungstag der Anmeldung: **13.09.2000**
(21) Anmeldenummer: 99123626.6
(22) Anmeldetag: 27.11.1999
(51) Int. Cl.: H04L 29/06

(54) **Verfahren zum Verbinden von mindestens zwei Netzwerkssegmenten eines Netzwerkes mit einer Zugangskontrolle durch eine Benutzerkennung**

(30) Priorität: 03.02.1999 DE 19904270
(71) Anmelder: Langner, Klaus, Dr., 52070 Aachen (DE)
(72) Erfinder: Langner, Klaus, Dr., 52070 Aachen (DE)
(74) Vertreter: Kohlmann, Kai, Dipl.-Ing.

(57) **Zusammenfassung**

Die Erfindung betrifft ein Verfahren zum Verbinden von mindestens zwei Netzwerkssegmenten eines Netzwerkes mit Hilfe eines eine Seriennummer aufweisenden Datenübertragungsgerätes, bei dem für den Zugriff auf mindestens ein Netzwerkssegment mit einer Benutzerdatenbank die Übertragung einer Benutzerkennung für jeden Nutzer dieses Netzwerksegmentes erforderlich ist, wobei der Zugriff auf das die Benutzerkennung erfordernde Netzwerkssegment bei Übereinstimmung der vom Benutzer übertragenen Benutzerkennung mit der in der Benutzerdatenbank gespeicherten Benutzerkennung freigegeben wird.

Um bei einem derartigen Verfahren die Zugangskontrolle zu verbessern, wird erfindungsgemäß vorgeschlagen, daß
- die Seriennummer in einem Speicherelement des Datenübertragungsgerät gespeichert ist, aus diesem Speicherelement die Seriennummer von einer im Datenübertragungsgerät befindlichen Kommunikationssoftware ausgelesen und aus der Seriennummer nach einem feststehenden Algorithmus eine Benutzerkennung erzeugt wird und
- an das eine Benutzerkennung erfordernde Netzwerkssegment vor dem ersten Zugriff die Seriennummer übertragen wird und dort nach einem übereinstimmenden Algorithmus wie in dem Datenübertragungsgerät eine Benutzerkennung erzeugt und in der Benutzerdatenbank abgespeichert wird.

## Beschreibung

Die Erfindung betrifft ein Verfahren zum Verbinden von mindestens zwei Netzwerkssegmenten eines Netzwerkes mit Hilfe eines eine eindeutige Seriennummer aufweisenden Datenübertragungsgerätes mit einem Kommunikationsprogramm, das die Datenkommunikation in dem Netzwerk abwickelt, bei dem für den Zugriff auf mindestens ein Netzwerkssegment mit einer Benutzerdatenbank die Übertragung einer Benutzerkennung für jeden Nutzer dieses Netzwerksegmentes erforderlich ist, wobei der Zugriff auf das die Benutzerkennung erfordernde Netzwerkssegment bei Übereinstimmung der vom Benutzer übertragenen Benutzerkennung mit der in der Benutzerdatenbank gespeicherten Benutzerkennung freigegeben wird.

### 1. Hintergrund der Erfindung

Einzelplatzsystem ist die Bezeichnung für ein Computersystem, an dem im Gegensatz zu einem Netzwerk zur gleichen Zeit nur ein Benutzer arbeiten kann. Im Zuge der zunehmenden Bedeutung von Netzwerken ergeben sich Sicherheitsfragen, da in der Regel nicht jeder Benutzer auf alle Daten innerhalb eines Netzwerks zugreifen können soll. Ein Netzwerk besteht aus mehreren Netzwerkssegmenten, die untereinander, regelmäßig über eine Leitung verbunden sind. Ein Netzwerkssegment kann ein LAN (Local Area Network), ein WAN (Wide Area Network) oder auch nur ein einzelner Personalcomputer sein.

Die Nutzung einzelner Netzwerkssegmente ist oft mit der Zahlung eines Entgelts verknüpft, so daß die Identität des Benutzers zu Abrechnungszwecken festgestellt werden muß. Üblicherweise erfolgt die Zugangskontrolle (Authentisierung) des Benutzers mit Hilfe eines bekannten (öffentlichen) Benutzernamens und eines (geheimen) Paßwortes (Benutzerkennung).

### Ablauf:

a) Der Benutzer meldet sich durch Eingabe von Benutzernamen und Paßwort (Benutzerkennung) an dem entgeltpflichtigen Netzwerkssegment an.
b) Im angesprochenen Netzwerkssegmentes wird mit Hilfe einer Benutzerdatenbank, die alle Benutzernamen mit den dazugehörigen Paßwörtern enthält, geprüft, ob der Benutzer das gültige Paßwort eingegeben hat.
   Diese Benutzerdatenbank enthält außerdem eine Liste mit benutzerspezifischen Zugriffsrechten, die regeln, welcher Benutzer auf welche Datenbestände wie zugreifen darf.
c) Stimmt das eingegebene Paar Benutzername/Paßwort mit den Einträgen in der Benutzerdatenbank überein, wird von dem Netzwerkssegment die Benutzung mit den in der Benutzerdatenbank festgelegten Zugriffsrechten freigegeben.
d) Nach ausdrücklicher Abmeldung des Benutzers oder nach Ablauf einer bestimmten Zeit, in der keine Eingaben des Benutzers erfolgen, sperrt das Netzwerkssegment die Benutzung wieder.

### 2. Stand der Technik

2.1 Dieses Verfahren zur Authentisierung der Benutzer wird in allen gängigen Betriebsystemen für PC-basierende Netzwerke angewandt, z.B. Windows NT, Solaris, Linux.
2.2 Der Nachteil des Verfahrens wird insbesondere bei wachsenden Benutzerzahlen im Netzwerk offenbar. Der systemseitige Verwaltungsaufwand in dem entgeltpflichtigen Netzwerkssegment steigt proportional mit der Anzahl der Benutzer dieses Netzwerksegments. Je höher die Benutzerzahl ist, desto höher wird auch die Wahrscheinlichkeit von Eingabefehlern, da moderne Betriebssysteme den Zugang zu dem Netzwerksegment nach einer vorgegebenen Höchstzahl von erfolglosen Einloggversuchen sperren. Dann muß der Administrator des Netzwerksegmentes tätig werden, um den Benutzer wieder freizuschalten und ihm eine neues Paßwort zuzuteilen. Dies kostet Zeit und erfordert personellen Aufwand. Dieser Effekt wird noch verstärkt dadurch, daß sich durch die ansteigende Zahl von erforderlichen Administratoren zusätzliche Kommunikationsprobleme untereinander ergeben.
   Auf der Benutzerseite ergibt sich insbesondere für die im Umgang mit Netzwerken unerfahrenen Benutzer das Problem, daß die ausgewählte Nutzerkennung für den Zugang zum Netzwerk wiederum in das eigene EDV-System vor mißbräuchlichen Fremdzugriffen und für den Fall von Datenverlust, beispielsweise aufgrund eines "Systemabsturzes" geschützt gespeichert werden muß.
   Im Ergebnis stellt sich für diese Benutzergruppe die moderne Netzwerktechnik oft als zu komplex und nicht handhabbar dar. Da aber das mit weitem Abstand wichtigste Netzwerk der Gegenwart - das Internet - eine bedeutende Quelle des Wissens und ein für Unternehmen und Privatpersonen immer wichtiger werdendes Kommunikationsmittel ist, ergibt sich das Bedürfnis die Nutzung zu vereinfachen und damit auch unerfahrenen Benutzern zu eröffnen.
2.3 Bisherige Lösungsversuche können auf die unter 1. beschriebene Authentisierung nicht verzichten, sei es durch direkte Eingabe der Nutzerkennung oder durch indirekte Eingabe, z.B. mittels einer Codecarte, die in ein Kartenlesegerät geschoben werden muß. Die bekannten Lösungen basieren daher überwiegend auf einem belehrenden Ansatz. Der Benutzer wird, in der Regel im Benutzungsvertrag, auf die Wichtigkeit der Benutzername/Paßwort-Kombination (Benutzerkennung), die Notwendigkeit der Geheimhaltung sowie die möglichen Folgen bei Nichtbeachtung hingewiesen.
   Die Erfahrung zeigt, daß der Benutzungsvertrag kaum bzw. nur sehr oberflächlich gelesen und dessen Inhalt schnell wieder vergessen wird. Der Verlust der Nutzerkennung wird durch die heutigen Betriebssysteme, die die Nutzerkennung unsichtbar speichern, sogar noch begünstigt. Geht die Nutzerkennung beispielsweise durch eine defekte Festplatte verloren, werden die Betreiber von Netzwerken, insbesondere entgeltpflichtigen Netzwerkssegmenten, z.B. Internet-Provider, regelmäßig mit Anfragen von Benutzern konfrontiert, die ihre Nutzerkennung vergessen haben und daher ein neues Paßwort benötigen.
2.4 Als Alternative zu der Authentisierung der Benutzerkennung durch Datenbankvergleich ist eine auch als Dongle oder Kopierschutzstecker bezeichnete Vorrichtung bekannt, in der ein Code dauerhaft gespeichert ist, der allgemeine oder spezifische Benutzerdaten enthält. Der Dongle muß an dem PC des jeweiligen Benutzers angeschlossen werden. Damit der Benutzer auf Programme innerhalb eines Netzwerks zugreifen kann, fragt das Programm zunächst den im Dongle gespeicherten Code ab. Dieses Verfahren wurde in der Vergangenheit insbesondere als Software-Kopierschutz eingesetzt. Zu den hohen Kosten für Dongles kommen auch noch andere Nachteile hinzu. : Will man für den Zugang zu einem Netzwerkssegment einen anderen Personalcomputer benutzen, muß man das Dongle abschrauben und erneut montieren. Außerdem ist nicht gewährleistet, daß Dongles mit jeder Hardware funktionieren. Für moderne Zugangskontrollen ist der Dongle daher unbrauchbar und befindet sich auch als Kopierschutz auf dem Rückzug.

### 3. Aufgabe

Ausgehend von diesem Stand der Technik liegt der Erfindung daher die Aufgabe zugrunde, ein Verfahren zum Verbinden von mindestens zwei Netzwerksegmenten mit verbesserter Zugangskontrolle zu schaffen.

### 4. Erfindungsbeschreibung

4.1 Die Verfahren zur Zugangskontrolle von Benutzern eines ersten Netzwerksegmentes (Client), z.B. ein einzelner Personalcomputer, zu einem Netzwerkssegment (Server), z.B. ein Zugangsrechner eines Internet-Providers, mittels einer Benutzerkennung sind praktisch für sämtliche Netzarten einheitlich. Die Erfindung setzt daher auf der Benutzerseite an.
   Als Kopplungselement zwischen den Netzwerkssegmenten wird üblicherweise ein sog. Router (Gateway) eingesetzt. Dieser authentisiert sich wie üblich mit Hilfe einer Benutzerkennung bei dem mit ihm gekoppelten Netzwerkssegment. Die vorliegende Erfindung macht sich nun die Tatsache zunutze, daß Router einzelner Hersteller eine eindeutige Seriennummer besitzen, die in einem nichtflüchtigen Speicherelement gespeichert wird. Dieser Speicher kann von der im Router befindlichen Kommunikationssoftware ausgelesen werden. Eine mißbräuchliche Verwendung einer Seriennummer ist praktisch ausgeschlossen, da sie die Kenntnis der Vergabe von Seriennummern beim Hersteller voraussetzt. Somit ist eine genügend hohe Sicherheit gegen Fremdeingriffe gegeben.
   Die Kommunikationssoftware des Routers ist erfindungsgemäß um einen feststehenden Algorithmus erweitert, der aus der eindeutigen Seriennummer eine ebenso eindeutige Benutzerkennung, insbesondere aus Benutzername und Paßwort erzeugt. Dem Betreiber des die Eingabe einer Nutzerkennung erfordernden Netzwerksegmentes ist dieser feststehende Algorithmus ebenfalls bekannt.
4.2 Im einzelnen wird die Aufgabe durch die Merkmale des Anspruchs 1 gelöst. Aus der Seriennummer des Datenübertragungsgerätes, insbesondere Routers, wird die Benutzerkennung, insbesondere aus einem Benutzername sowie einem eindeutigen und nicht reversibel entschlüsselbaren Paßwort, mit Hilfe des Algorithmus erzeugt.
   Außerdem wird die Seriennummer an das eine Benutzerkennung erfordernde Netzwerkssegment vor dem ersten Zugriff übertragen und dort nach demselben Algorithmus wie in dem Datenübertragungsgerät eine Benutzerkennung erzeugt und in der Benutzerdatenbank abgespeichert.
   Die Geheimhaltung beschränkt sich somit auf die unmittelbar betroffenen Mitarbeiter von Router-Hersteller und dem Betreiber des die Eingabe einer Benutzerkennung erfordernden Netzwerksegmentes.
   Zur Erzeugung des nicht reversibel entschlüsselbaren Paßwortes aus der Seriennummer wird vorzugsweise als Algorithmus eine Hashfunktion, insbesondere die Hashfunktion MD5 verwendet. Der "Message Digest 5" Algorithmus wurde von R. Rivest und S. Dusse als komplexe one-way-Hashfunktion entwickelt.
   Für den Fall, daß unbefugten Dritten doch einmal eine Benutzerkennung bekannt wird, besteht die Möglichkeit, im Router eine neue Benutzerkennung entsprechend den Merkmalen des Anspruchs 5 unabhängig von der auf der Basis der Seriennummer rechnenden Kommunikationssoftware zu hinterlegen, indem der Anwender über das Konfigurationsprogramm des Routers eine neue Nummer generiert.
4.3 Der mit dem erfindungsgemäßen Verfahren erzielbare Vorteil besteht darin, daß der Benutzer keinerlei Eingriffe am Router vornehmen muß. Es genügt, an den Betreiber des die Eingabe einer Benutzerkennung erfordernden, insbesondere entgeltpflichtigen Netzwerksegmentes, z.B. einen Internet-Provider, die Seriennummer des Routers zu übertragen. Diese ist auf jedem Router aufgedruckt.
   Außerdem erhöht das Verfahren auch die Sicherheit gegen das Ausspionieren von Benutzerkennungen, da deren Einzelheiten auf keinem Dokument mehr festgehalten werden müssen (z.B. auf einem Telefax an den Netzwerkbetreiber) und somit nicht von Unbefugten eingesehen werden können.
   Durch die Einfachheit des Verfahrens für den Benutzer erhöht sich deutlich die Akzeptanz zur Nutzung von insbesondere kostenpflichtigen Netzwerkssegmenten, z.B. um über einen Zugangsrechner eines Internet-Providers eine Verbindung zum Internet aufzubauen. Durch das vereinfachte Zugangsverfahren und den Wegfall des mit der Geheimhaltung des Paßwortes verbundenen Verwaltungsaufwandes wird einem deutlich größeren Benutzerkreis der einfache Zugang zu einzelnen Netzwerkssegmenten, insbesondere dem Internet ermöglicht.

## Patentansprüche

1. Verfahren zum Verbinden von mindestens zwei Netzwerkssegmenten eines Netzwerkes mit Hilfe eines eine eindeutige Seriennummer aufweisenden Datenübertragungsgerätes mit einem Kommunikationsprogramm, das die Datenkommunikation in dem Netzwerk abwickelt, bei dem für den Zugriff auf mindestens ein Netzwerkssegment mit einer Benutzerdatenbank die Übertragung einer Benutzerkennung für jeden Nutzer dieses Netzwerksegmentes erforderlich ist, wobei der Zugriff auf das die Benutzerkennung erfordernde Netzwerkssegment bei Übereinstimmung der vom Benutzer übertragenen Benutzerkennung mit der in der Benutzerdatenbank gespeicherten Benutzerkennung freigegeben wird, **dadurch gekennzeichnet**, daß
- die Seriennummer in einem nichtflüchtigen Speicherelement des Datenübertragungsgerät gespeichert ist, aus diesem Speicherelement die Seriennummer von der im Datenübertragungsgerät befindlichen Kommunikationssoftware ausgelesen und aus der Seriennummer nach einem feststehenden Algorithmus eine Benutzerkennung erzeugt wird und
- an das eine Benutzerkennung erfordernde Netzwerkssegment vor dem ersten Zugriff die Seriennummer übertragen wird und dort nach einem übereinstimmenden Algorithmus wie in dem Datenübertragungsgerät eine Benutzerkennung erzeugt und in der Benutzerdatenbank abgespeichert wird.

2. Verfahren nach Anspruch 1, **dadurch gekennzeichnet**, daß ein Router als Datenübertragungsgerät verwendet wird.

3. Verfahren nach Anspruch 1 oder 2, **dadurch gekennzeichnet**, daß die Benutzerkennung aus einem Benutzernamen sowie einem nicht reversibel entschlüsselbaren Paßwort besteht.

4. Verfahren nach Anspruch 3, **dadurch gekennzeichnet**, daß zumindest zur Erzeugung des nicht reversibel entschlüsselbaren Paßwortes aus der Seriennummer eine Hashfunktion, insbesondere die Hashfunktion MD5 verwendet wird.

5. Verfahren nach einem der Ansprüche 1 bis 4, **dadurch gekennzeichnet**, daß
- der Anwender über das Konfigurations-Programm des Datenübertragungsgerätes eine neue Nummer generieren kann, die die Seriennummer des Datenübertragungsgerätes ersetzt,
- von der im Datenübertragungsgerät befindlichen Kommunikationssoftware aus der neuen Nummer nach dem feststehenden Algorithmus eine neue Benutzerkennung erzeugt wird und
- an das eine Benutzerkennung erfordernde Netzwerkssegment vor dem ersten Zugriff mit der neuen Benutzerkennung die neue Nummer übertragen wird und dort nach dem übereinstimmenden Algorithmus wie in dem Datenübertragungsgerät eine neue Benutzerkennung erzeugt und in der Benutzerdatenbank abgespeichert wird.
